# EUROPEAN PATENT APPLICATION

(11) **EP 1 983 680 A1**
(43) Date of publication of application: **22.10.2008**
(21) Application number: 07764256.9
(22) Date of filing: 20.07.2007
(51) Int. Cl.: H04L 9/00, G06F 11/00

(54) **METHOD, SYSTEM, TRACING AGENT AND TRACING CONTROL SERVER FOR DETECTING TRACING STATE**

(30) Priority: 01.09.2006 CN 200610127961
(71) Applicant: Huawei Technologies Co., Ltd., Shenzhen, Guangdong Province 518129 (CN)
(72) Inventor: CHANG, Heng, Shenzhen Guangdong 518129 (CN); SHI, Xiaomin, Shenzhen Guangdong 518129 (CN); ZOU, Xianjun, Shenzhen Guangdong 518129 (CN); LI, Yan, Shenzhen Guangdong 518129 (CN)
(74) Representative: Hengelhaupt, Jürgen
(86) International application number: PCT/CN2007/070329
(87) International publication number: WO 2008/025266

(57) **Abstract**

A method for detecting the state of tracing task includes the following steps: computes the token abstract according to the tracing token information; verifies if the token abstract is altered; if the token abstract isn't altered, the tracing task is proved not to be juggled; and if the token abstract is altered, the tracing task is proved to be juggled. The corresponding system, tracing agent and tracing control server for detecting the state of tracing task are also provided in the present invention. The present invention can detect the state of tracing task effectively and judge if the task is juggled by means of computing and verifying the token abstract's alternation.

## Description

The present application claims the priority of CN Application No. 200610127961.4 filed on September 1, 2006, titled "METHOD AND SYSTEM FOR DETECTING TRACE STATUS, TRACE AGENT AND TRACE CONTROL SERVER", which is incorporated herein by reference in its entirety.

### Field of the Invention

The present invention relates to the technical field of communications, and in particular to a method and a system for detecting the status of a trace task as well as a trace agent and a trace control server.

### Background of the Invention

With the development of the communication industry, the competition becomes increasingly severe with each passing day. To improve the satisfaction of the user, it is required to handle complaints against service/application failure raised by the user quickly. Tracing the service flow is an effective means to analyze and locate the failure. In a system for managing and maintaining service life cycle and responsible for service tracing (OSPE: OMA Service Provider Environment) put forward by Open Mobile Alliance (OMA), the part relevant to the service tracing includes three modules: a trace control server (OSPE server), a trace agent, and a service database responsible for storing and maintaining service model and catalogue (SMAC). A general mode of service tracing is issuing a Service Level Tracing Token (SLT Token) to perform tracing.

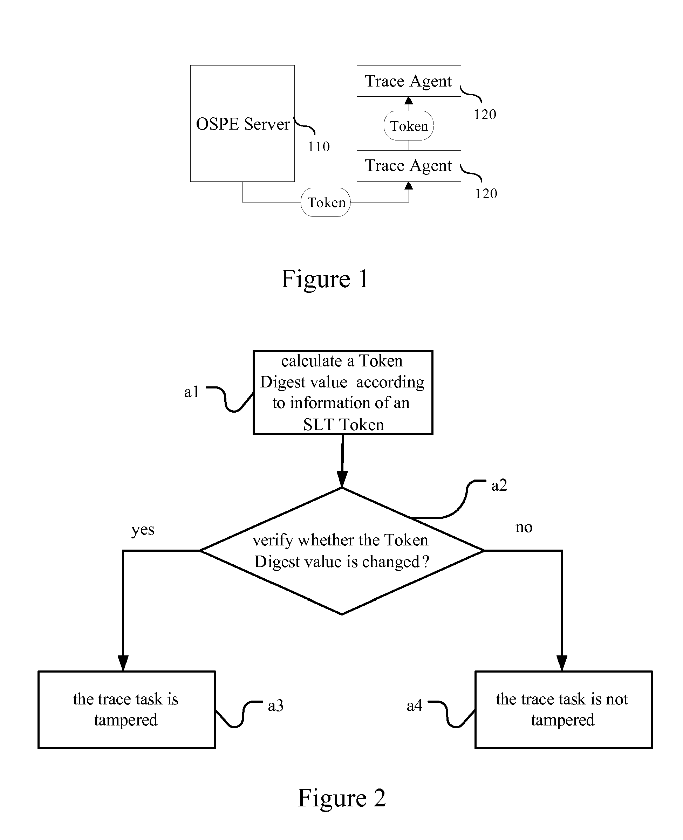

As shown in Figure 1, the main procedure of this mode is as follows: An OSPE server 110 controls trace agents 120 on each traced service component to open tracing function; the OSPE server 110 sends an SLT Token to a first trace agent 120; the SLT Token is transferred together with the traced service among individual trace agents 120 in each service component according to the execution sequence of the service; the trace agents 120 initiate corresponding tracing according to information contained in the Token, including monitoring the execution of the service and generating trace logs, etc.; the trace agents 120 report the trace logs to the OSPE server 110; the OSPE server 110 controls the trace agents 120 on the traced service components to end tracing.

During the implementation of the present invention, it is found by the inventor that generally an identifier TokenID of the Token is carried in trace log information reported by the trace agent to the OSPE server. The TokenID is used for association of the logs reported by different service components in the same Service Level Tracing (SLT) as well as for the trace logs that may be provided by a service component for many times. However, in this mode, if trace parameters in the Token are modified accidentally or deliberately, it is not possible for the OSPE server and the trace agent to know this case, so that inaccurate trace information is obtained, and the result of the service tracing and failure location may be affected.

### Summary of the Invention

The present invention provides a method and a system for detecting status of a trace task as well as a trace agent and a trace control server, with which the status of the trace task can be effectively detected, and whether the trace task is tampered can also be determined.

The invention provides a method for detecting the status of a trace task, including:

calculating a token digest value of a service level tracing token according to information of the service level tracing token; and verifying whether the token digest value is changed. If the token digest is unchanged, determining that the trace task is not tampered; if the token digest is changed, determining that the trace task is tampered.

A method for detecting the status of a trace task includes:

receiving a token digest value of an SLT Token which is calculated according to information of a service level tracing token and reported by a trace agent;

verifying whether the token digest is changed, wherein:

if the token digest is unchanged, determining that the trace task is not tampered;

if the token digest is changed, determining that the trace task is tampered.

A method for detecting the status of a trace task includes:

receiving a service level tracing token sent by a trace control server;

calculating a token digest according to information of the service level tracing token;

comparing the token digest obtained through calculation with a token digest carried in the service level tracing token, wherein:

if the token digest is unchanged, determining that the trace task is not tampered;

if the token digest is changed, determining that the trace task is tampered.

The present invention further provides a system for detecting the status of a trace task, including:

a trace agent, adapted to calculate a token digest according to information of a service level tracing token, and report the token digest; and

a trace control server, adapted to send the service level tracing token to the trace agent and verify whether the token digest reported by the trace agent is changed; if the token digest is unchanged, determining that the trace task is not tampered; if the token digest is changed, determining that the trace task is tampered.

The present invention further provides a system for detecting the status of a trace task, including:

a trace control server, adapted to send a service level tracing token;

a trace agent, adapted to calculate a token digest according to information of the service level tracing token after receiving the service level tracing token, and compare the token digest obtained through calculation with a token digest carried in the service level tracing token; if the token digest is unchanged, determining that the trace task is not tampered; if the token digest is changed, determining that the trace task is tampered.

The present invention further provides a trace control server, including:

a first digest processing unit, adapted to verify whether a token digest is changed; if the token digest is unchanged, it is determined that a trace task is not tampered; otherwise, it is determined that the trace task is tampered.

The present invention further provides a trace agent, including:

a trace processing unit, adapted to perform tracing according to information of a service level tracing token; and

a second digest processing unit, adapted to calculate a token digest according to the information of the service level tracing token, and report the token digest to a trace control server for verifying whether a trace task is tampered.

The present invention further provides a trace agent, including:

a trace processing unit, adapted to perform tracing according to information of a service level tracing token; and

a second digest processing unit, adapted to calculate a token digest according to information of the service level tracing token, and compare the token digest obtained through calculation with the token digest carried in the service level tracing token; if the token digest is changed, it is determined that the trace task is tampered; otherwise, it is determined that the trace task is not tampered.

It can be obtained from the above technical solutions that:

In the conventional art described above, if the trace parameters in the Token are tampered accidentally or deliberately, the OSPE server and the trace agent are not able to obtain this situation. In the embodiments of the invention, the Digest processing unit is added respectively in the trace agent and the OSPE server, so as to verify whether the Token is tampered. If the Token Digest is unchanged, it is determined that the trace task is not tampered; otherwise, it is determined that the trace task is tampered. Thus, the false tracing that may be caused due to the tamper of the Token is avoided, and the accuracy and security of the tracing may be improved.

Furthermore, in an embodiment of the invention, all the trace agents in the service chain need to calculate the Digest and report the Digest to the trace control server, i.e., the OSPE server, in order to verify whether the trace task is tampered. Therefore, the tamper of the Token in any position of the service chain may be precisely found and located. For example, the Token is tampered after a designated position (a service component or a section of the service chain), and the tampered Token is modified to the correct Token again before another designated position. Thus, the possible false tracing that may be avoided.

### Brief Description of the Drawings

Figure 1 is a schematic diagram showing a trace mode based on Token in the conventional art;

Figure 2 is a flow chart of the method according to the invention;

Figure 3 is a flow chart of the method according to a first embodiment of the invention;

Figure 4 is a flow chart of the method according to a second embodiment of the invention;

Figure 5 is a flow chart of the method according to a third embodiment of the invention;

Figure 6 is a flow chart of the method according to a fourth embodiment of the invention;

Figure 7 is a flow chart of the method according to a fifth embodiment of the invention;

Figure 8 is a flow chart of the method according to a sixth embodiment of the invention;

Figure 9 is a flow chart of the method according to a seventh embodiment of the invention;

Figure 10 is a flow chart of the method according to an eighth embodiment of the invention;

Figure 11 is a flow chart of the method according to a ninth embodiment of the invention;

Figure 12 is a schematic diagram showing the structure of the system according to the invention;

Figure 13 is a schematic diagram showing the structure of an OSPE server according to the invention;

Figure 14 is a schematic diagram showing the structure of a trace agent according to the invention; and

Figure 15 is a schematic diagram showing the application architecture of the system according to the invention.

### Detailed Description of the Embodiments

The present invention provides a method for detecting the status of a trace task. In the method, a Token Digest value of an SLT Token is calculated according to information of the SLT Token via a Digest processing unit, and it is determined whether the trace task is tampered by verifying the Token Digest value. If the Token Digest value is not changed, it is determined that the trace task is not tampered. If the Token Digest value is changed, it is determine that the trace task is tampered.

In the present invention, the basis for determining whether the trace task is tampered is a string uniquely corresponding to the Token Digest value of an SLT Token that is calculated according to the Token. Generally, this string is called Token Digest value of the Token. It is not limited in the present invention specifically how to calculate and obtain the Token Digest value. The Token Digest value may be obtained by those skilled in the art according to various existing Digest calculate algorithms. When the content of the Token is tampered, the Token Digest value may change. Therefore, it can be determined whether the trace task is tampered by verifying the change of the Token Digest value.

The SLT Token is used for carrying SLT information, which includes parameters relevant to the current tracing, such as trace time, granularity, various information to be collected and TokenID. An OSPE server sends a Token to the trace agent for the first service component that is traced in a service chain, then the Token is transferred to all the subsequent trace agents in the service chain together with the service request that is traced. It should be noted that the Token contains a part whose content is invariable, e.g., information relevant to the current trace task. The relevant information includes the trace time, granularity, various information to be collected, and so on. The Token may also contain a part whose content is variable. Because the content of this part is variable, it is impossible to obtain whether a modification on the content of this part is a necessary modification or an illegal or accidental tamper. Therefore, in the present invention, the tamper of the Token refers to modifying the part whose content is invariable, and the Token Digest value is also obtained through a calculation based on the part whose content is invariable.

In the present invention, after receiving an SLT request from an OSPE requestor, the OSPE server generally needs to accomplish the following preparatory works before initiating the SLT formally: the OSPE server queries an SMAC according to the trace request, sends an open trace instruction to the trace agent for the corresponding service component according to a query result, and sends an SLT Token to the trace agent for the first service component. The OSPE server may also need to save the Token and TokenID of this SLT, and calculate the Token Digest value of the SLT Token. The service component mentioned here refers to the component through which the service passes in the service chain. A trace agent exists on the service component for processing the trace task.

In the present invention, the OSPE server also designates a trace agent for a specific service component, trace agents for the first and last service components of a section in the service chain, or trace agents for all the service components in the service chain to process the Token Digest value according to a request from the OSPE requestor or a specific rule.

Please refer to Figure 2, which is a flow chart of the method according to the invention, which includes:

a1. calculating a Token Digest value of an SLT Token according to information of the SLT Token;

a2. verifying whether the Token Digest value is changed; if the Token Digest value is changed, turn to a3; if the Token Digest value is not changed, turn to a4;

a3. the trace task is tampered;

a4. the trace task is not tampered.

In the present invention, the SLT may have various modes: the trace agent for a specified service component may be designated to process the Token Digest value; the trace agents for the first and last service components of a section in the service chain may be designated to process the Token Digest; or the trace agents for all the service components in the service chain may be designated to process the Token Digest. The Token Digest value may be carried in a trace log for reporting. In the present invention, the trace agent may perform tracing first, and then report the Token Digest value. Alternatively, the trace agent may also report the Token Digest value first, and then initiate tracing when it is determined that the trace task is not tampered. Thus, the tamper of the trace task may be earlier found and a false trace may be terminated. Furthermore, if the Token contains its own Token Digest value information, the trace agent may also perform verification of the Token, so that the efficiency of the SLT may be improved.

Hereinafter, various SLT solutions will be discussed in detail. In the description of the SLT process, the processing procedures not relevant to the present invention are omitted, including the normal service processing procedures on the service components as well as the analysis of the trace log performed by the OSPE server.

In the first solution according to the invention, the Token Digest value of the SLT Token is calculated by a designated service component.

In this solution, only the trace agent(s) for one or several designated service component(s) in the service chain need(s) to calculate the Token Digest value of the SLT Token. Then the Token Digest value is carried during the report of the trace log. In an SLT, for a single service component, if the trace log is generated several times, this Token Digest value may be carried only in the first trace log that is generated. Starting from the reporting of the second trace log, the trace log only needs to carry the TokenID. Thus, the overhead may be saved. Certainly, it is also possible to put the Token Digest value in each trace log. The OSPE server compares the Token Digest value obtained through calculation with the Token Digest value reported in the trace log. If these two value Token Digest values are not consistent, it can be determined that the Token received by the designated service component is tampered, and this SLT process is invalid. Then the OSPE server initiates an SLT terminating process.

In this solution, the trace agents of all the other service components in the service chain, except for the designated service component, do not need to calculate the Token Digest value of the SLT Token, and only the TokenID needs to be carried in the log reported. In respect to the original SLT method in the OSPE, only a small processing overhead needs to be increased.

It should be noted that in this solution, before sending the Token, the OSPE server has already calculated and generated a Token Digest value uniquely identifying the Token according to the Token information.

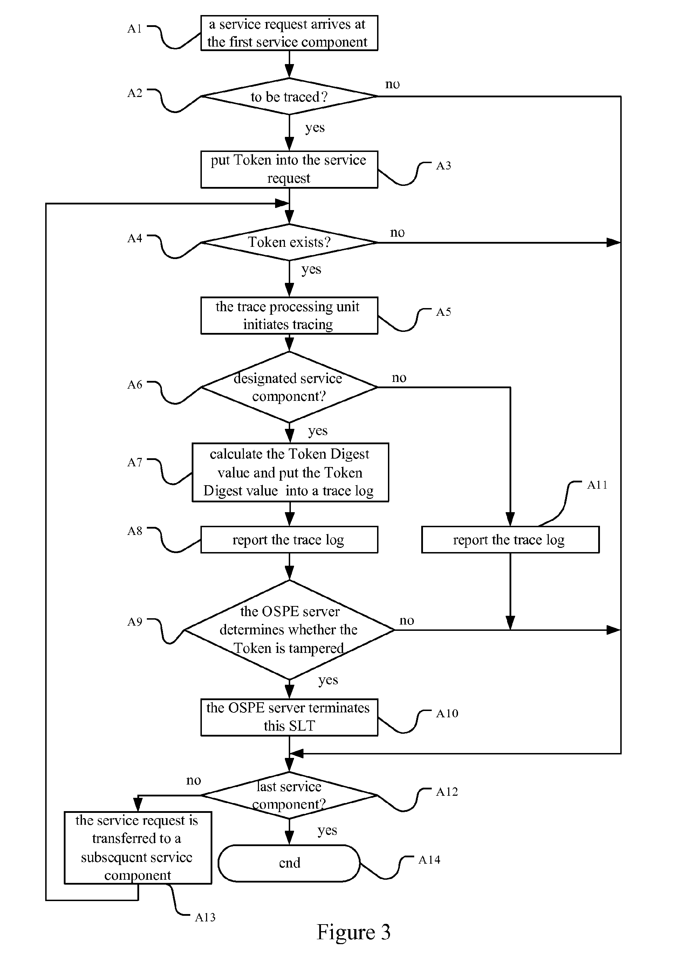

The following three embodiments are included in this solution. Please refer to Figure 3, which shows the method according to a first embodiment of the present invention. Specifically, the method includes the following steps:

A1. A service request arrives at a first service component;

The first service component here refers to the service component to which the Token is sent.

A2. A trace agent for the first service component determines whether the service needs to be traced according to an SLT Token sent by the OSPE server for the service. If the service does not need to be traced, the process turns to A12; if the service needs to be traced, the process turns to A3;

A3. The trace agent puts the SLT Token into the service request;

A4. It is determined whether the SLT Token exists in the service request. If no SLT Token exists in the service request, the process turns to A12; if the SLT Token exists in the service request, the process turns to A5;

It should be noted that if the trace agent for the first service component is concerned, it is not required to perform the determination in this process. The process turns to A5 directly.

A5. A trace processing unit initiates tracing according to the content of the SLT Token;

A6. It is determined whether the service component is a designated service component. If the service component is not a designated service component, the process turns to A11; if the service component is a designated service component, the process turns to A7;

A7. A second Digest processing unit of the trace agent calculates the Token Digest value of the SLT Token, and puts the Token Digest value to the trace log;

A8. The trace agent reports the trace log to the OSPE server, the trace log carries a TokenID;

A9. The OSPE server compares the Token Digest value obtained through calculation with the Token Digest value reported in the trace log, and determines whether the Token is tampered. If the two Token Digest values are consistent, it is determined that the Token is not tampered, and the process turns to A12; if the two Token Digest values are not consistent" it is determined that the Token is tampered, and the process turns to A10;

A10. The Token is tampered, and this SLT process is invalid. The OSPE server initiates a terminating process of this SLT, and the process turns to A12;

A11. The trace agent reports the trace log carrying the TokenID to the OSPE server, and the process turns to A12;

A12. It is determined whether the service component is the last service component in the service chain. If the service component is the last service component, the trace process ends, i.e., the process turns to A14; if the service component is not the last service component, the process turns to A13;

A13. The service request is transferred to a subsequent service component by the current service component, and the process turns to A4;

A14. The trace process ends.

The first embodiment is described above. According to the present invention, the Token Digest value may also be reported to the OSPE server for verification first, before the trace agent for the designated service component initiates tracing. If the OSPE server finds that the Token received by the trace agent is tampered, the OSPE server notifies the trace agent that the Token received is tampered, and initiates an SLT terminating process simultaneously. Thus, the trace agent does not initiate the trace, and the Token is deleted in the service request by the trace processing unit, so that the subsequent service component does not initiate the false trace. If the OSPE server does not find that the Token is tampered, the OSPE server notifies the trace agent that the Token received is correct. Then the trace agent initiates tracing normally, and reports the trace log. In this mode, the tamper of the Token may be found earlier, so that the processing resources wasted due to the false trace performed by the service component may be reduced.

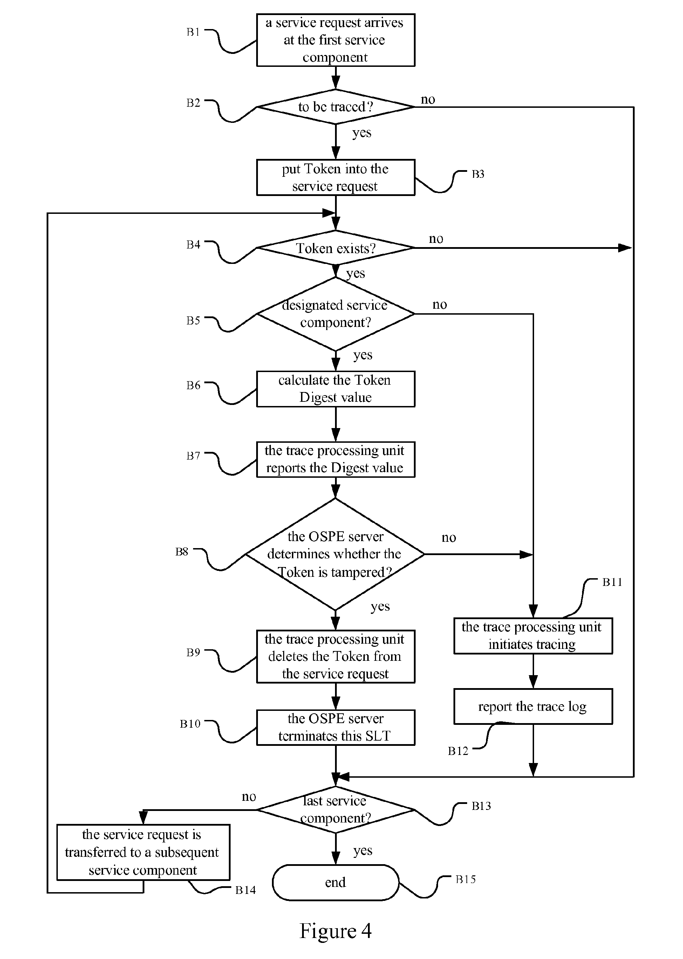

Please refer to Figure 4, which shows the method according to a second embodiment of the present invention. The method includes the following steps:

B1. A service request arrives at a first service component;

B2. A trace agent for the first service component determines whether the service needs to be traced according to an SLT Token sent by the OSPE server for the service. If the service does not need to be traced, the process turns to B13; if the service needs to be traced, turns to B3;

B3. The trace agent puts the SLT Token into the service request;

B4. It is determined whether the SLT Token exists in the service request. If no SLT Token exists in the service request, the process turns to B13; if the SLT Token exists in the service request, turns to B5;

It should be noted that if the trace agent for the first service component is concerned, it is not required to perform the determination in this process. The process turns to B5 directly.

B5. It is determined whether the service component is a designated service component. If the service component is not a designated service component, the process turns to B11; if the service component is a designated service component, turns to B6;

B6. A second Digest processing unit of the trace agent calculates the Token Digest value of the SLT Token;

B7. The trace agent reports the Digest to the OSPE server for verification;

B8. The OSPE server compares the Token Digest value obtained through calculation with the Token Digest value reported to determine whether the Token is tampered, and notifies the trace agent of the result. If the two Token Digest values are consistent, it is determined that the Token is not tampered, the trace agent is notified of this result, and the process turns to B11; if the two Token Digest values are not consistent, it is determined that the Token is tampered, the trace agent is notified of this result, and the process turns to B9;

B9. A trace processing unit deletes the Token in the service request, and the process turns to B 10;

B10. The Token is tampered, and this SLT process is deemed invalid. The OSPE server initiates a terminating process of this SLT, and the process turns to B13;

B11. The trace processing unit initiates tracing according to the content of the SLT Token, and the process turns to B12;

B12. The trace agent reports the trace log carrying the TokenID to the OSPE server, and the process turns to B13;

B13. It is determined whether the service component is the last service component in the service chain. If the service component is the last service component, the process turns to B 15; if the service component is not the last service component, turns to B 14;

B14. The service request is transferred to a subsequent service component by the current service component, and the process turns to B4;

B15. The trace process ends.

The second embodiment is described above. According to the present invention, the Token Digest value may be a part of the Token. The Token Digest value information contained in the Token is inserted into the Token by the OSPE server after the Token Digest value is obtained through calculation according to the Token information. It should be noted that the present invention is not limited to the case that the OSPE server calculates the SLT Token and obtains the Token Digest value and inserts the Digest into the Token. Other devices may be employed to perform this operation. If the Token in the service request is tampered, but the Token Digest value is not tampered, the trace agent for the designated service component may calculate the Token Digest, and compare the Token Digest value obtained through calculation with the Token Digest value carried in the Token, so as to obtain whether the Token is tampered. If it is obtained that the Token is tampered, the trace agent does not initiate tracing, and the trace processing unit in the trace agent deletes the Token in the service request, so that the subsequent service component does not initiate the false trace. The trace agent may also report information about the tamper of the Token to the OSPE server, and the OSPE server initiates an SLT terminating process. If the Token and the Token Digest value carried in the Token are tampered simultaneously, which makes the Token Digest value obtained through calculation based on the Token the same as the Token Digest value carried in the Token, the trace agent is not able to detect that the Token is tampered. The trace agent initiates tracing, puts the Token Digest value into the trace log, and reports the trace log to the OSPE server for verification. The OSPE server compares the Token Digest value of the SLT Token calculated by itself with the Token Digest value reported by the trace agent. If the OSPE server determines that the two Token Digest values are different, it is determined that the Token is tampered, and this SLT process is invalid. The OSPE server initiates the SLT terminating process. In this case, the capability of verifying whether the Token is tampered of the trace agent itself may be enhanced. In some cases, it can be determined that the Token is tampered without the participation of the OSPE server. Thus, the efficiency of the SLT is improved to a certain degree.

Similarly, in this case, when the trace agent is not able to determine whether the Token is tampered by itself, the Token Digest value may be first reported as in the previous solution, and the OSPE server determines whether the Token is tampered. When it is determined that the Token is not tampered, the trace is initiated; otherwise, the SLT process is terminated, the trace agent does not initiate tracing and deletes the Token in the service request. The specific processes are similar to those in the previous solution, and will not be described again in detail here.

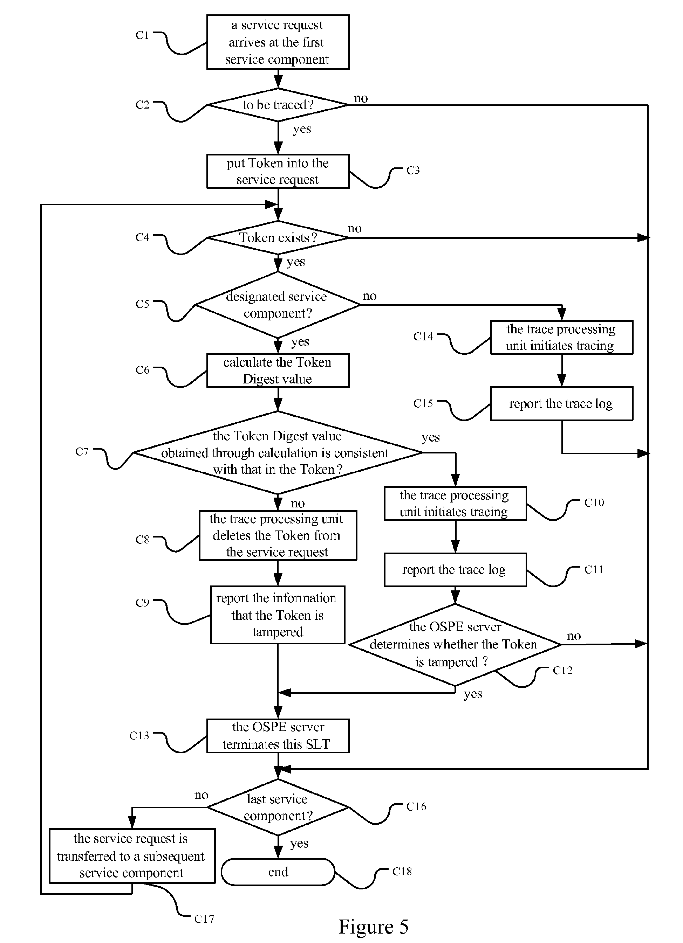

Please refer to Figure 5, which shows the method according to a third embodiment of the present invention. The method includes:

C1. A service request arrives at a first service component;

C2. A trace agent for the first service component determines whether the service needs to be traced according to an SLT Token sent by the OSPE server for the service. If the service does not need to be traced, the process turns to C16; if the service needs to be traced, turns to C3;

C3. The trace agent puts the SLT Toke into the service request;

C4. It is determined whether the SLT Token exists in the service request. If no Token exists in the service request, the process turns to C16; if the Token exists in the service request, turns to C5;

It should be noted that if the trace agent for the first service component is concerned, it is not required to perform the determination in this process. The process turns to C5 directly.

C5. It is determined whether the service component is a designated service component. If the service component is not a designated service component, the process turns to C14; if the service component is a designated service component, turns to C6;

C6. A second Digest processing unit of the trace agent calculates the Token Digest value of the SLT Token;

C7. The second Digest processing unit of the trace agent determines whether the Token Digest value obtained through calculation and the Token Digest value carried in the Token are consistent. If the two Token Digest values are consistent, the process turns to C10; if the two Token Digest values are not consistent, the process turns to C8;

C8. A trace processing unit deletes the Token in the service request;

C9. The trace agent reports the information that the Token is tampered to the OSPE server, and the process turns to C 13;

C10. The trace processing unit initiates tracing according to the content of the Token;

C11. The trace agent reports the trace log carrying the TokenID and Token Digest value to the OSPE server;

C12. The OSPE server determines whether the Token is tampered. If the Token is not tampered, the process turns to C16; If the Token is tampered, the process turns to C13;

C13. This SLT process is deemed invalid, the OSPE server initiates a terminating process of this SLT, and the process turns to C16;

C14. The trace processing unit initiates tracing according to the content of the Token;

C15. The trace agent reports the trace log carrying the TokenID to the OSPE server;

C16. It is determined whether the service component is the last service component in the service chain. If the service component is the last service component, the process turns to C 18; if the service component is not the last service component, the process turns to C 17;

C17. The service request is transferred to a subsequent service component by the current service component" and the process turns to C4;

C18. The trace process ends.

It should be noted that in this embodiment, the OSPE server may not be required to participate in determining whether the Token is tampered. In other words, it is determined by the trace agent directly whether the Token is tampered. The trace agent compares the Token Digest value obtained through calculation by itself with the Token Digest value carried in the Token. When the two Token Digest values are consistent, it is determined that the Token is not tampered. When the two Token Digest values are not consistent, it is determined that the Token is tampered. In other words, in the above processes, the process of determining, by the OSPE server, whether the Token is tampered in C12 is not required. When the trace agent determines that the Token Digest value obtained through calculation by itself is consistent with the Token Digest value carried in the Token, the process turns to C10, C11. In C11, the trace log does not need to carry the Token Digest value, and the process turns to C16.

In a second solution of the present invention, a section of the service chain is designated for calculating the Token Digest value of the SLT Token.

In this solution, only the trace agents for two service components at the beginning and the end of a designated section in the service chain need to calculate the Token Digest value of the SLT Token. Then this Token Digest value is carried when reporting the trace log. For the several trace logs generated by an individual service component, this Token Digest value may be carried only in the first trace log generated, so that the overhead may be saved. Certainly, the Token Digest value may also be carried in each trace log. The OSPE server compares the two Token Digest value reported. If the two Token Digest value are not consistent, it may be determined that the Token is tampered within this designated section in the service chain. This SLT process is invalid, and the OSPE server will initiate an SLT terminating process.

In this solution, only the two service components at the beginning and the end of the designated section need to calculate the Token Digest value of the SLT Token. Compared with the original SLT method in the OSPE, the processing overhead increased is small. Furthermore, the OSPE server does not need to calculate the Token Digest value of the SLT Token, and the position in the service chain where the Token is tampered may also be located.

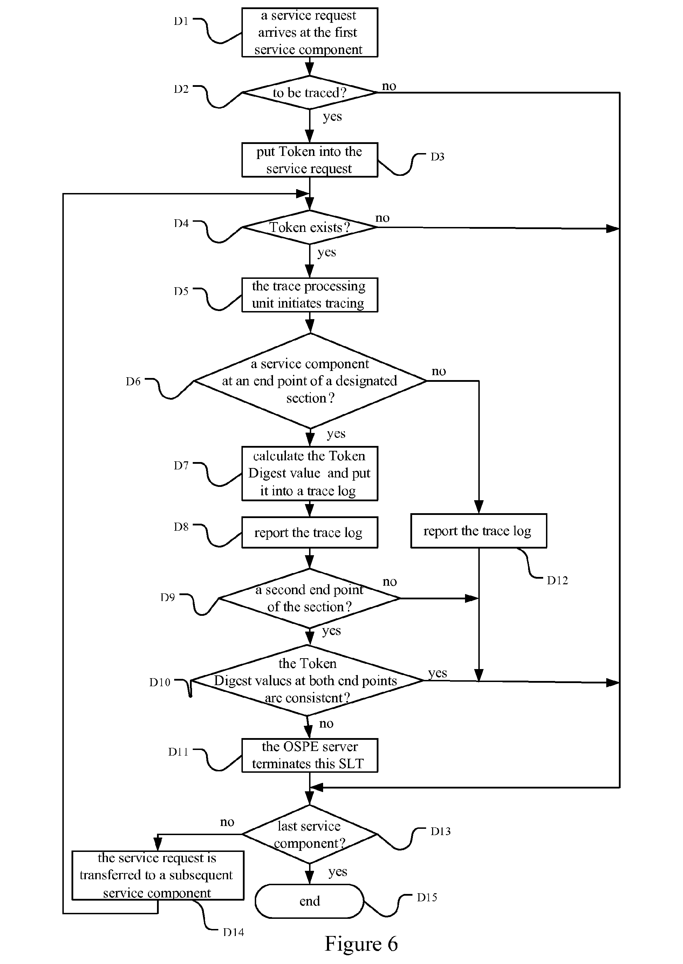

Following three embodiments are included in the present solution. Please refer to Figure 6, which shows the method according to a fourth embodiment of the present invention. The method includes following steps:

D1. A service request arrives at the first service component;

D2. A trace agent for the first service component determines whether the service needs to be traced according to an SLT Token sent by the OSPE server for the service. If the service does not need to be traced, the process turns to D13; if the service needs to be traced, the process turns to D3;

D3. The trace agent puts the SLT Toke into the service request;

D4. It is determined whether the SLT Token exists in the service request. If no Token exists in the service request, the process turns to D13; if the Token exists in the service request, the process turns to D5;

It should be noted that if the trace agent for the first service component is concerned, it is not required to perform the determination in this process. The process turns to D5 directly.

D5. A trace processing unit initiates tracing according to the content of the Token;

D6. It is determined whether the service component is a service component at an end point of the designated section. If the service component is not a service component at an end point of the designated section, the process turns to D12; If the service component is a service component at an end point of the designated section, the process turns to D7;

D7. A second Digest processing unit of the trace agent calculates the Token Digest value of the SLT Token, and puts the Token Digest value into a trace log;

D8. The trace agent reports the trace log carrying a TokenID to the OSPE server;

D9. It is determined whether the trace agent reporting the Token Digest value is at the second end point of the designated section. If the trace agent is not at the second end point, the process turns to D13; If the trace agent is at the second end point, the process turns to D10;

D10. The OSPE server compares the Token Digest values reported by the service components at the two end points of the designated section to determine whether they are consistent. If the two Token Digest values are consistent, the process turns to D13; if the two Token Digest values are not consistent, the process turns to D11;

D11. The current SLT trace is invalid. The OSPE server initiates a terminating process of this SLT, and the process turns to D13;

D12. The trace agent reports the trace log carrying a TokenID to the OSPE server;

D13. It is determined whether the service component is the last service component in the service chain. If the service component is the last service component, the process turns to D 15; if the service component is not the last service component, the process turns to D 14;

D14. The service request is transferred to a subsequent service component by the current service component, and the process turns to D4;

D15. The trace process ends.

The fourth embodiment is described above. According to the present invention, the Token Digest value may also be reported to the OSPE server for verification first, before the trace agent in the designated section of the service chain initiates tracing. If the OSPE server finds that the Token received by the trace agent is tampered, the OSPE server notifies the trace agent that the received Token is tampered, and initiates an SLT terminating process simultaneously. Thus, the trace agent does not initiate the trace, and the Token is deleted in the service request by the trace processing unit, so that the subsequent service component does not initiate the false trace. If the OSPE server does not find that the Token is tampered, the OSPE server notifies the trace agent that the received Token is correct. Then the trace agent initiates tracing normally, and reports the trace log. In this mode, the tamper of the Token may be found earlier, so that the processing resources wasted due to the false trace performed by the service component may be reduced.

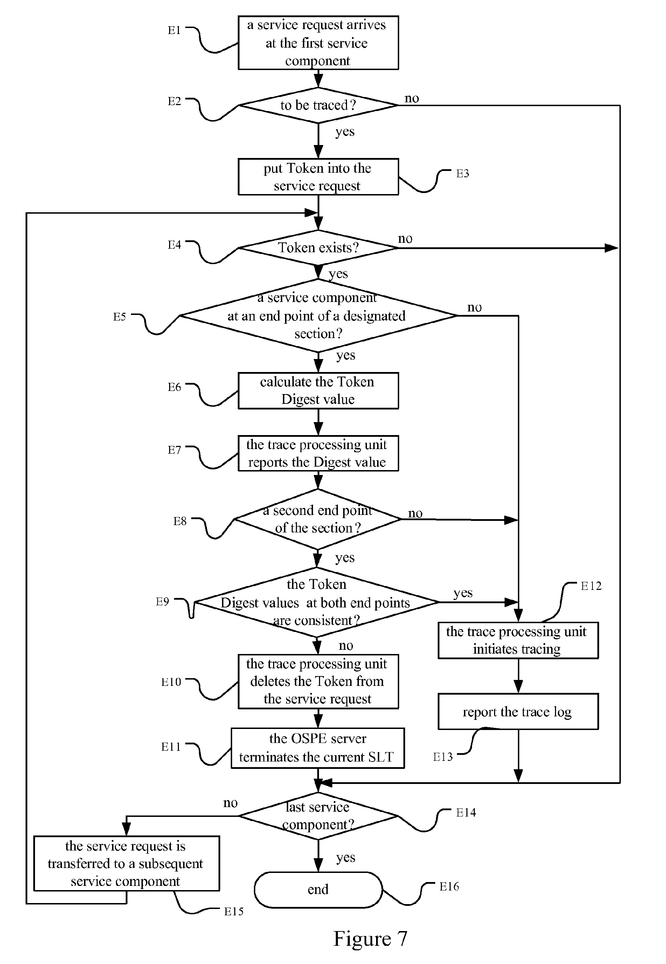

Please refer to Figure 7, which shows the method according to a fifth embodiment of the invention. The method includes the following steps:

E1. A service request arrives at the first service component;

E2. A trace agent for the first service component determines whether the service needs to be traced according to an SLT Token sent by the OSPE server for the service. If the service does not need to be traced, the process turns to E14; if the service needs to be traced, the process turns to E3;

E3. The trace agent puts the SLT Token into the service request;

E4. It is determined whether the SLT Token exists in the service request. If no Token exists in the service request, the process turns to E14; if the Token exists in the service request, the process turns to E5;

It should be noted that if the trace agent for the first service component is concerned, it is not required to perform the determination in this process. The process turns to E5 directly.

E5. It is determined whether the service component is a service component at an end point of the designated section. If the service component is not a service component at an end point of the designated section, the process turns to E12; If the service component is a service component at an end point of the designated section, the process turns to E6;

E6. A second Digest processing unit of the trace agent calculates the Token Digest value of the SLT Token;

E7. The trace agent reports the Token Digest value to the OSPE server for verification;

E8. It is determined whether the trace agent reporting the Token Digest value is at the second end point of the designated section. If the trace agent is not at the second end point, the process turns to E12; If the trace agent is at the second end point, the process turns to E9;

E9. The OSPE server compares the Token Digest values reported by the service components at the two end points of the designated section to determine whether they are consistent. If the two Token Digest values are consistent, it is determined that the Token is not tampered, the OSPE server notifies the trace agent of this result, and the process turns to E12; if the two Token Digest values are not consistent, it is determined that the Token is tampered, the OSPE server notifies the trace agent of this result, and the process turns to E10;

E10. A trace processing unit deletes the Token in the service request, and the process turns to E11;

E11. The current SLT trace is invalid because the Token is tampered. The OSPE server initiates a terminating process of this SLT, and the process turns to E14;

E12. The trace processing unit initiates tracing according to the content of the Token, and the process turns to E13;

E13. The trace agent reports the trace log carrying a TokenID to the OSPE server;

E14. It is determined whether the service component is the last service component in the service chain. If the service component is the last service component the process turns to E16; if the service component is not the last service component, the process turns to E15;

E15. The service request is transferred to a subsequent service component by the current service component, and the process turns to E4;

E16. The trace process ends.

The fifth embodiment is described above. According to the present invention, the Token Digest value may be a part of the Token. The Token Digest value information contained in the Token is inserted into the Token by the OSPE server after the Token Digest value is obtained through calculation according to the Token information. It should be noted that the present invention is not limited to the case that the OSPE server calculates and obtains the Token Digest value and inserts the Token Digest value into the Token. Other devices may be employed to perform this operation. If the Token in the service request is tampered, but the Token Digest value is not tampered, the trace agents for the service components at the end points in the designated section may calculate the SLT Token and obtains a Token Digest value, and compare the Token Digest value obtained through calculation with the Token Digest value carried in the Token, so as to determine whether the Token is tampered. If it is found that the Token is tampered, the trace agents does not initiate tracing, and the trace processing unit in the trace agent deletes the Token in the service request, so that the subsequent service component does not initiate the false trace. The trace agents may also report information about the tamper of the Token to the OSPE server, and the OSPE server initiates an SLT terminating process. If the Token and the Token Digest value carried in the Token are tampered simultaneously, which makes the Token Digest value obtained through calculation based on the Token the same as the Token Digest value carried in the Token, the trace agent is not able to detect that the Token is tampered. The trace agent initiates tracing, puts the Token Digest value into the trace log, and reports the trace log to the OSPE server for verification. If the OSPE server determines that the two Token Digest values reported by the two end points of the section are different, it is determined that the Token is tampered, and this SLT process is invalid. The OSPE server initiates the SLT terminating process. In this case, the capability of verifying whether the Token is tampered of the trace agent itself may be enhanced. In some cases, it can be determined that the Token is tampered without the participation of the OSPE server. Thus, the efficiency of the SLT is improved to a certain degree.

Similarly, in this case, when the trace agent is not able to determine whether the Token is tampered by itself, the Token Digest value may be first reported as in the previous solution, and the OSPE server determines whether the Token is tampered. When it is determined that the Token is not tampered, the trace is initiated; when it is determined that the Token is tampered, the SLT process is terminated, the trace agent does not initiate tracing and deletes the Token in the service request. The specific processes are similar to those in the previous solution, and will not be described again in detail here.

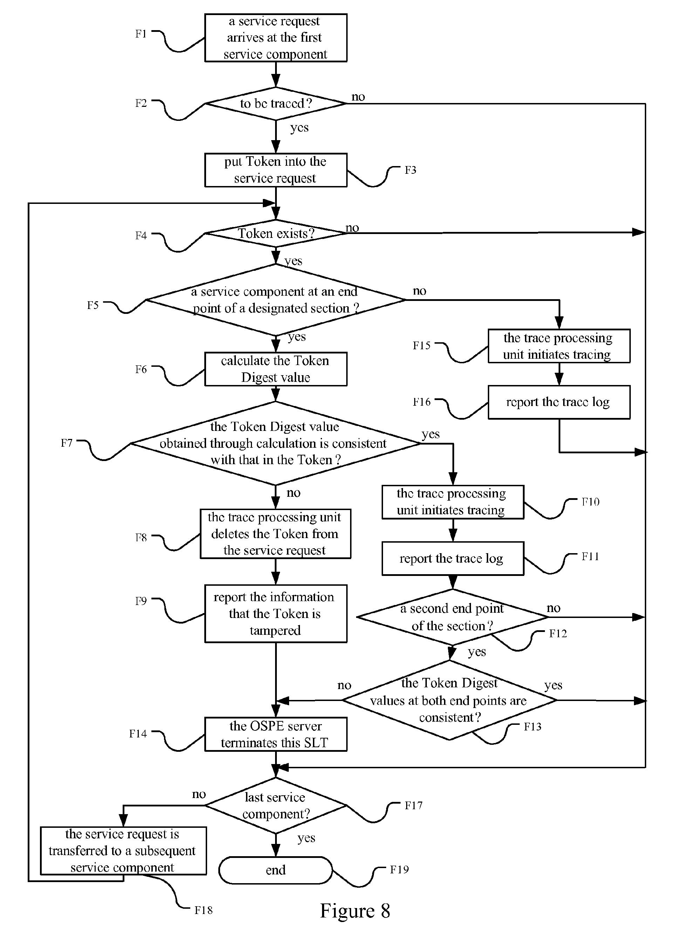

Please refer to Figure 8, which shows the method according to a sixth embodiment of the present invention. The method includes the following steps:

F1. A service request arrives at the first service component;

F2. A trace agent for the first service component determines whether the service needs to be traced according to an SLT Token sent by the OSPE server for the service. If the service does not need to be traced, the process turns to F17; if the service needs to be traced, the process turns to F3;

F3. The trace agent puts the SLT Toke into the service request;

F4. It is determined whether the SLT Token exists in the service request. If no Token exists in the service request, the process turns to F17; if the Token exists in the service request, the process turns to F5;

It should be noted that if the trace agent for the first service component is concerned, it is not required to perform the determination in this process. The process turns to F5 directly.

F5. It is determined whether the service component is a service component at an end point of the designated section. If the current service component is not a service component at an end point of the designated section, the process turns to F15; if the current service component is a service component at an end point of the designated section, the process turns to F6;

F6. A second Digest processing unit of the trace agent calculates the Token Digest value of the SLT Token;

F7. The second Digest processing unit of the trace agent determines whether the Token Digest value obtained through calculation and the Token Digest value carried in the Token are consistent. If the two Token Digest values are consistent, the process turns to F10; if the two Token Digest values are not consistent, the process turns to F8;

F8. A trace processing unit deletes the Token in the service request;

F9. The trace agent reports the information that the Token is tampered to the OSPE server, and the process turns to F14;

F10. The trace processing unit initiates tracing according to the content of the Token;

F 11. The trace agent reports the trace log carrying a TokenID and Token Digest value to the OSPE server;

F12. It is determined whether the trace agent reporting the Token Digest value is the second end point of the designated section. If the trace agent is not the second end point, the process turns to F17; If the trace agent is the second end point, the process turns to F13;

F13. The OSPE server compares the two Token Digest values reported by the service components at the two end points of the designated section to determine whether the two Token Digest values are consistent. If the two Token Digest values are consistent, the process turns to F17; if the two Token Digest values are not consistent, the process turns to F14;

F14. This SLT process is invalid. The OSPE server initiates an SLT terminating process, and the process turns to F17;

F15. The trace processing unit initiates tracing according to the content of the Token;

F16. The trace agent reports the trace log carrying the TokenID to the OSPE server;

F17. It is determined whether the service component is the last service component in the service chain. If the service component is the last service component, the process turns to F19; if the service component is not the last service component, the process turns to F18;

F18. The service request is transferred to a subsequent service component by the current service component, and the process turns to F4;

F19. The trace process ends.

It should be noted that in this embodiment, the OSPE server may not be required to participate in determining whether the Token Digest is tampered. In other words, it is determined whether the Token Digest is tampered by the trace agent directly. The trace agent compares the Token Digest value obtained through calculation by itself with the Token Digest value carried in the Token. When the two Token Digest values are consistent, it is determined that the Token is not tampered. When the two Token Digest values are not consistent, it is determined that the Token is tampered. In other words, in the above processes, the process of determining, by the OSPE server, whether the Token is tampered in F13 is not required. When the trace agent determines that the Token Digest value obtained through calculation by itself is consistent with the Token Digest value carried in the Token, the process turns to F10, F11 and F12. In F11, the trace log does not need to carry the Token Digest value, and in F12, whether the trace agent is at the second end point of the designated section or not, the process turns to F17.

In a third solution of the present invention, the calculation of the Token Digest value of the SLT Token is performed for the whole service chain.

In this solution, the trace agents for all the service components in the service chain need to calculate the Token Digest value of the SLT Token. Then the Token Digest value is carried when reporting the trace log. For the several trace logs generated by an individual service component, the Token Digest value may be carried only in the first trace log generated, so that the overhead may be saved. Certainly, the Token Digest value may also be carried in each trace log. The OSPE server compares the Token Digest value obtained through calculation with the Token Digest value reported with the trace log. If the two Token Digest values are not consistent, it may be determined that the Token received by this trace agent is tampered. Whichever the trace agent is, when it is found that the Token is tampered, this SLT process is invalid, and the OSPE server will initiate an SLT terminating process.

In this solution, it is possible to find and locate precisely the tamper of the Token wherever the tamper occurs in the service chain, for example, for the case that the Token is tampered after a designated position (a service component or a section of the service chain), and then the tampered Token is modified back to the correct Token again before the designated position, so that any false SLT that may appear is avoided.

It should be noted that in this solution, before sending the Token, the OSPE server has calculated and generated a Token Digest value uniquely identifying the Token according to the Token information.

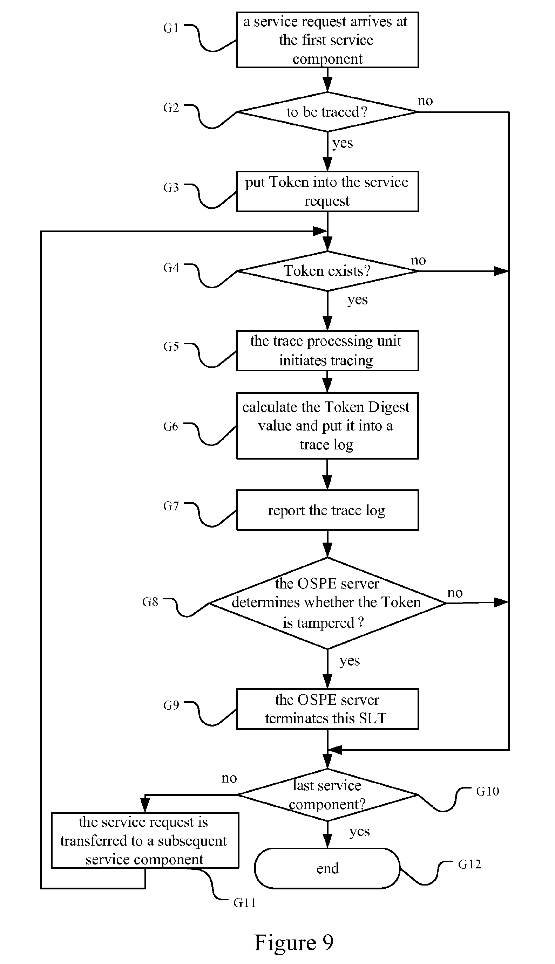

The following three embodiments are included in this solution. Please refer to Figure 9, which shows the method according to a seventh embodiment of the present invention. The method includes the following steps:

G1. A service request arrives at the first service component;

G2. A trace agent for the first service component determines whether the service needs to be traced according to an SLT Token sent by the OSPE server for the service. If the service does not need to be traced, the process turns to G10; if the service needs to be traced, the process turns to G3;

G3. The trace agent puts the SLT Toke into the service request;

G4. It is determined whether the SLT Token exists in the service request. If no Token exists in the service request, the process turns to G10; if the Token exists in the service request, the process turns to G5;

It should be noted that if the trace agent for the first service component is concerned, it is not required to perform the determination in this process. The process turns to G5 directly.

G5. A trace processing unit initiates tracing according to the content of the Token;

G6. A second Digest processing unit of the trace agent calculates the Token Digest value of the SLT Token, and puts the Token Digest value into a trace log;

G7. The trace agent reports the trace log carrying a TokenID to the OSPE server;

G8. The OSPE server compares the Token Digest value obtained through calculation with the Token Digest value reported in the trace log, and determines whether the Token is tampered. If the Token is not tampered, the process turns to G10; if the Token is tampered, the process turns to G9;

G9. If the Token is tampered, the current SLT trace is invalid. The OSPE server initiates a terminating process of this SLT;

G10. It is determined whether the service component is the last service component in the service chain. If the service component is the last service component in the service chain, the process turns to G12; the service component is not the last service component in the service chain, the process turns to G11;

G11. The service request is transferred to a subsequent service component by the current service component, and the process turns to G4;

G12. The trace process ends.

The seventh embodiment is described above. According to the present invention, the Token Digest value may also be reported to the OSPE server for verification first, before the trace agent initiates tracing. If the OSPE server finds that the Token received by the trace agent is tampered, the OSPE server notifies the trace agent that the received Token is tampered, and initiates an SLT terminating process simultaneously. Thus, the trace agent does not initiate the trace, and the Token is deleted in the service request by the trace processing unit, so that the subsequent service component does not initiate the false trace. If the OSPE server does not find that the Token is tampered, the OSPE server notifies the trace agent that the received Token is correct. Then the trace agent initiates tracing normally, and reports the trace log. In this mode, the tamper of the Token may be found earlier, so that the processing resources wasted due to the false trace performed by the service component may be reduced.

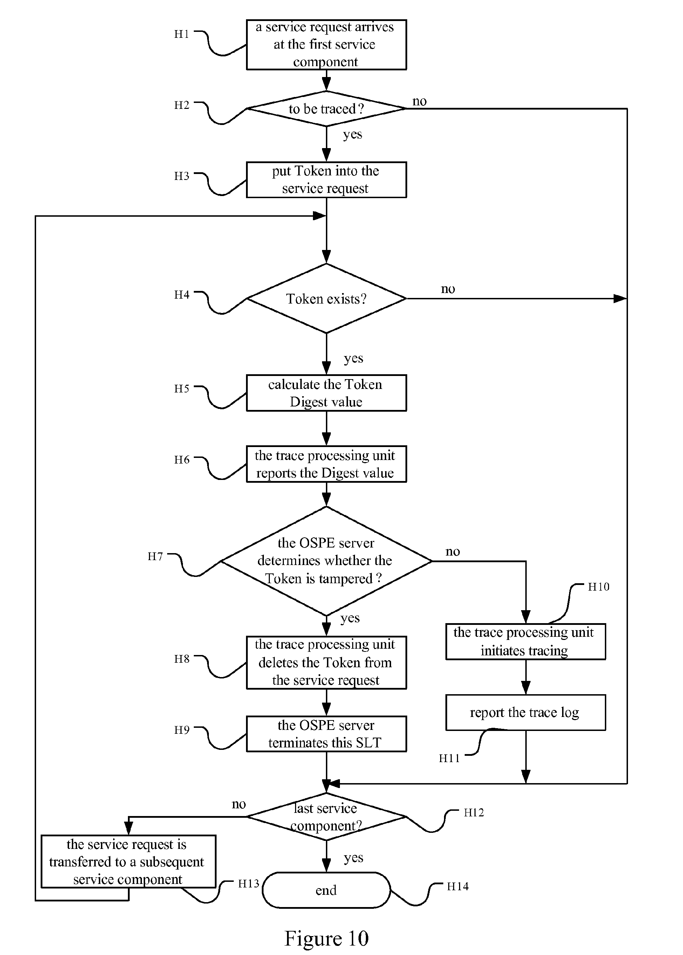

Please refer to Figure 10, which shows the method according to an eighth embodiment of the present invention. The method includes the following steps:

H1. A service request arrives at the first service component;

H2. A trace agent for the first service component determines whether the service needs to be traced according to an SLT Token sent by the OSPE server for the service. If the service does not need to be traced, the process turns to H12; if the service needs to be traced, the process turns to H3;

H3. The trace agent puts the SLT Toke into the service request;

H4. It is determined whether the SLT Token exists in the service request. If no Token exists in the service request, the process turns to H12; if the Token exists in the service request, the process turns to H5;

It should be noted that if the trace agent for the first service component is concerned, it is not required to perform the determination in this process. The process turns to H5 directly.

H5. A second Digest processing unit of the trace agent calculates the Token Digest value of the SLT Token;

H6. The trace agent reports the Token Digest value to the OSPE server for verification;

H7. The OSPE server compares the Token Digest value obtained through calculation with the Token Digest value reported to determine whether the Token is tampered, and notifies the trace agent of the result. If the two Token Digest values s are consistent, it is determined that the Token is not tampered, the OSPE server notifies the trace agent of this result, and the process turns to H10; if the two Token Digest values are not consistent, it is determined that the Token is tampered, the OSPE server notifies the trace agent of this result, and the process turns to H8;

H8. A trace processing unit deletes the Token in the service request, and the process turns to H9;

H9. The current SLT trace is invalid because the Token is tampered. The OSPE server initiates a terminating process of this SLT, and the process turns to H12;

H10. The trace processing unit initiates tracing according to the content of the Token, and the process turns to H11;

H11. The trace agent reports the trace log carrying the TokenID to the OSPE server, and the process turns to H12;

H12. It is determined whether the service component is the last service component in the service chain. If the service component is the last service component, the process turns to H14; if the service component is not the last service component, the process turns to H13;

H13. The service request is transferred to a subsequent service component by the current service component, and the process turns to H4;

H14. The trace process ends.

The eighth embodiment is described above. According to the present invention, the Token Digest value may be a part of the Token. The Token Digest value information contained in the Token is inserted into the Token by the OSPE server after the Token Digest value is obtained through calculation according to the Token information. It should be noted that the present invention is not limited to the case that the OSPE server calculates and obtains the Token Digest value and inserts the Token Digest value into the Token. Other devices may be employed to perform this operation. If the Token in the service request is tampered, but the Token Digest value is not tampered, the trace agent may calculate the Token Digest, and compare the Token Digest value obtained through calculation with the Token Digest value carried in the Token, so as to determine whether the Token is tampered. If it is found that the Token is tampered, the trace agent does not initiate tracing, and the trace processing unit in the trace agent deletes the Token in the service request, so that the subsequent service component does not initiate the false trace. The trace agent may also report information about the tamper of the Token to the OSPE server, and the OSPE server initiates an SLT terminating process. If the Token and the Token Digest value carried in the Token are tampered simultaneously, which makes the Token Digest value obtained through calculation based on the Token the same as the Token Digest value carried in the Token, the trace agent is not able to detect that the Token is tampered. The trace agent initiates tracing, puts the Token Digest value into the trace log, and reports the trace log to the OSPE server for verification. The OSPE server compares the Token Digest value of the SLT Token calculated by itself with the Token Digest value reported by the trace agent. If the OSPE server determines that the two Token Digest values are different, it is determined that the Token is tampered, and this SLT process is invalid. The OSPE server initiates the SLT terminating process. In this case, the capability of verifying whether the Token is tampered of the trace agent itself may be enhanced. In some cases, it can be determined that the Token is tampered without the participation of the OSPE server. Thus, the efficiency of the SLT is improved to a certain degree.

Similarly, in this case, when the trace agent is not able to determine whether the Token is tampered by itself, the Token Digest value may be first reported as in the previous solution, and the OSPE server determines whether the Token is tampered. When it is determined that the Token is not tampered, the trace is initiated; when it is determined that the Token is tampered, the SLT process is terminated, the trace agent does not initiate tracing and deletes the Token in the service request. The specific processes are similar to those in the previous solution, and will not be described again in detail here.

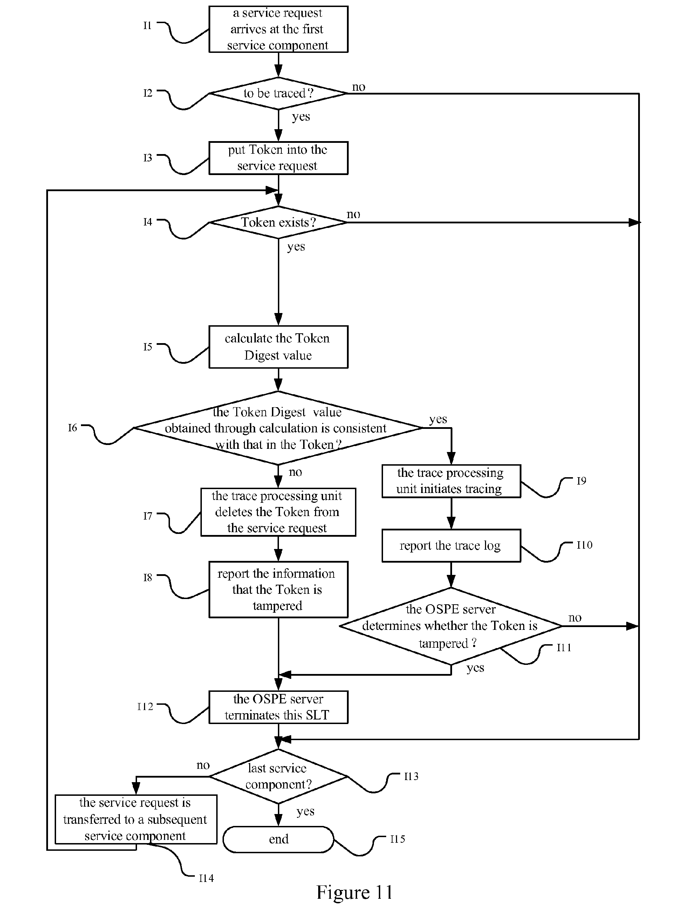

Please refer to Figure 11, which shows the method according to a ninth embodiment of the present invention. The method includes the following steps:

I1. A service request arrives at the first service component;

I2. A trace agent for the first service component determines whether the service needs to be traced according to an SLT Token sent by the OSPE server for the service. If the service does not need to be traced, the process turns to I13; if the service needs to be traced, the process turns to I3;

I3. The trace agent puts the SLT Toke into the service request;

I4. It is determined whether the SLT Token exists in the service request. If no Token exists in the service request, the process turns to I13; if the Token exists in the service request, the process turns to I5;

It should be noted that if the trace agent for the first service component is concerned, it is not required to perform the determination in this process. The process turns to I5 directly.

I5. A second Digest processing unit of the trace agent calculates the Token Digest value of the SLT Token;

I6. The second Digest processing unit of the trace agent determines whether the Token Digest value obtained through calculation and the Token Digest value carried in the Token are consistent. If the two Token Digest values are consistent, the process turns to I9; if the two Token Digest values are not consistent, the process turns to I7;

I7. A trace processing unit deletes the Token in the service request;

I8. The trace agent reports the information that the Token is tampered to the OSPE server, and the process turns to I12;

I9. The trace processing unit initiates tracing according to the content of the Token;

I10. The trace agent reports the trace log carrying the TokenID and Token Digest value to the OSPE server;

I11. The OSPE server determines whether the Token is tampered by comparing the Token Digest value reported by the trace agent with the Token Digest value obtained through calculation by itself. If the two Token Digest values are consistent, it is determined that Token is not tampered, and the process turns to I13; If the two Token Digest values are not consistent, it is determined that the Token is tampered, and the process turns to I12;

I12. This SLT process is deemed invalid, the OSPE server initiates a terminating process of this SLT, and the process turns to I13;

I13. It is determined whether the service component is the last service component in the service chain. If the service component is the last service component, the process turns to I15; if the service component is not the last service component, the process turns to I14;

I14. The service request is transferred to a subsequent service component by the current service component, and the process turns to I4;

I15. The trace process ends.

It should be noted that in this embodiment, the OSPE server may not be required to participate in determining whether the Token Digest is tampered. In other words, it is determined by the trace agent directly whether the Token Digest is tampered. The trace agent compares the Token Digest value obtained through calculation by itself with the Token Digest value carried in the Token. When the two Token Digest values are consistent, it is determined that the Token is not tampered. When the two Token Digest values are not consistent, it is determined that the Token is tampered. In other words, in the above processes, the process of determining, by the OSPE server, whether the Token is tampered in I11 is not required. When the trace agent determines that the Token Digest value obtained through calculation by itself is consistent with the Token Digest value carried in the Token, the process turns to I9, I10. In I10, the trace log does not need to carry the Token Digest value, and then the process turns to I13.

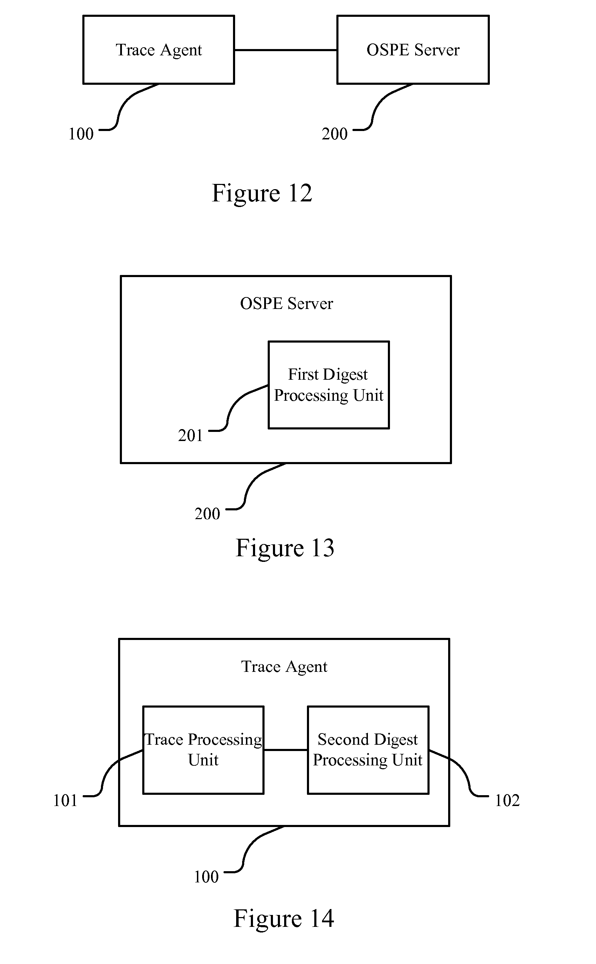

The method according to the present invention is described above in detail. Accordingly, the present invention provides a system for detecting the status of a trace task as well as a trace control server and a trace agent for detecting the status of the trace task. Please refer to Figure 12, which is a schematic diagram showing the structure of the system according to the present invention. The system includes: a trace agent 100 and a trace control server, i.e., an OSPE server 200.

The OSPE server 200 is a server that manages the trace operation. The OSPE server 200 performs the following functions: receiving an instruction of opening and closing tracing function from an OSPE requestor; sending a trace result to the OSPE requestor; inquiring of an SMAC about service information required; generating an SLT Token; controlling the trace agent 100 to open or close tracing function; sending a Token to the trace agent 100; receiving a trace log transmitted by the trace agent 100; and so on. Furthermore, compared with the existing OSPE server, the OSPE server is extended according to the invention, i.e., a first Digest processing unit 201 is added. Please refer to Figure 13, which is a schematic diagram showing the structure of the OSPE server 200. The first Digest processing unit 201 is adapted to calculate the SLT Token Digest, compare the Token Digest value, and so on. All the operations performed on the Token Digest value by the OSPE server 200 is processed by the first Digest processing unit 201. The first Digest processing unit 201 is further adapted to insert the Token Digest value into the SLT Token after calculating the SLT Token Digest according to the information of the SLT Token.

The trace agent 100 is disposed on the service component, and is adapted to process the service tracing. The trace agent 100 is controlled by the OSPE server 200, and is adapted to receive a control instruction, such as an open instruction or a close instruction, receive the SLT Token sent by the OSPE server 200, report the trace log to the OSPE server 200, and transfer the Token to a subsequent service component in the service chain. Furthermore, compared with the existing trace agent, the trace agent is extended according to the invention. A second Digest processing unit 102 is added, so that the trace agent 100 has the capability of calculating the SLT Token Digest. It can be determined whether the Token is tampered by the Token Digest value.

Please refer to Figure 14, which shows the structure of the trace agent 100, the trace agent 100 includes two main processing units: a trace processing unit 101 and a second Digest processing unit 102. The trace processing unit 101 is adapted to receive the SLT Token, analyze information of the SLT task contained in the SLT Token, initiate tracing, report the trace log, transfer the Token to a next component in the service chain, open or close tracing function, and so on. The second Digest processing unit 102 is adapted to calculate a string corresponding to the Token uniquely, i.e. the Token Digest value of the SLT Token, after receiving the Token. In a certain case, the second Digest processing unit 102 further adapted to compare the Token Digest value obtained through calculation, so as to determine whether the Token is tampered.

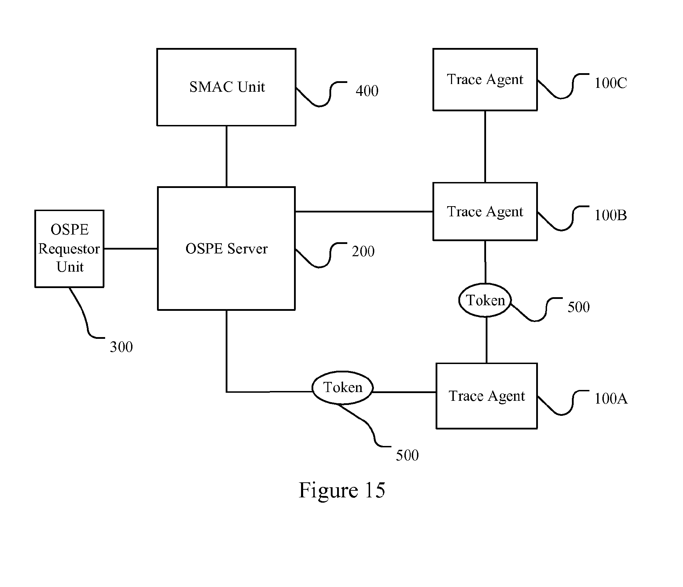

Please refer to Figure 15, which is a schematic diagram showing the application architecture of the system according to the present invention. In Figure 15, the system includes an OSPE requestor unit 300, an OSPE server 200, an Service Model & Catalogue (SMAC) unit 400, an SLT token 500 and several trace agents 100A, 100B and 100C.

The OSPE requestor unit 300 is adapted to send an opening trace request to the OSPE server 200, request the OSPE server 200 to perform SLT task and receive a trace result from the OSPE server 200.

The SMAC unit 400 is adapted to store the dependency relationship of the service. The OSPE server 200 is adapted to obtain information relevant to the service via inquiring of the SMAC unit 400.

The SLT Token 500 is adapted to store the SLT information, which includes parameters relevant to the current tracing, such as trace time, granularity, various information to be collected and TokenID. The OSPE server 200 is adapted to send the Token 500 to the trace agent 100A on the first traced service component in the service chain, then the Token 500 is transferred to all the subsequent trace agents, such as trace agent 100B and trace agent 100C in the service chain together with the service request that is traced.

In the application, when the OSPE server 200 receives the SLT request from the OSPE requestor unit 300, the following preparatory works should generally be accomplished before initiating the SLT formally: The OSPE server 200 queries the SMAC 400 according to the trace request, sends an open trace instruction to the trace agent for the corresponding service component according to the query result, and sends the SLT Token 500 to the trace agent 100A on the first service component. The OSPE server 200 may also be adapted to store the Token 500 and TokenID of this SLT, calculate the SLT Token Digest, and so on. Only when the preparatory works are accomplished, the SLT task may be started formally.

In the system according to the invention, there are various modes for detecting the status of the trace task and determining whether the trace task is tampered.

In the system according to the invention, the trace agent for a specific service component may be designated to process the Token Digest value. In this solution, only the trace agent(s) for one or several designated service components in the service chain need(s) to calculate the SLT Token Digest. Then the Token Digest value is carried when reporting the trace log. In an SLT, for an individual service component, if several trace logs are generated, the Token Digest value may be carried only in the first trace log, so that the overhead may be saved. Starting from reporting the second trace log, only the TokenID needs to be carried in the trace log. Certainly, the Token Digest value may also be carried in each trace log. The OSPE server compares the Token Digest value obtained through calculation by itself with the Token Digest value in the trace log reported by the trace agent. If the two Token Digest values are not consistent, it may be determined that the Token received by this designated trace agent is tampered, and this SLT process is invalid. Therefore, the OSPE server initiates an SLT terminating process. In this solution, except for the designated service component, the trace agents for all the service components in the service chain do not need to calculate the SLT Token Digest, and only the TokenID needs to be carried in the trace log reported.

In the system according to the invention, the trace agents for the first and the last service components of a certain section of the service chain may be designated to process the Token Digest value. In this solution, only the trace agents for the two service components at the beginning and the end of the designated section in the service chain need to calculate the SLT Token Digest. For several trace logs generated by an individual service component, the Token Digest value may be carried only in the first trace log generated, so that the overhead may be saved. Certainly, the Token Digest value may also be carried in each trace log. The OSPE server compares the two Token Digest values reported by the trace agents. If the two Token Digest values are not consistent, it may be determined that the Token is tampered within the designated section in the service chain, and this SLT process is invalid. Therefore, the OSPE server initiates an SLT terminating process. In this solution, the OSPE server does not need to calculate the SLT Token Digest, and the position where the Token is tampered in the service chain may be located.

In the system according to the invention, it is also possible that the trace agents for all the service components in the service chain process the Token Digest value. In this solution, the trace agents for all the service components in the service chain need to calculate the SLT Token Digest, and then the Token Digest value is carried when reporting the trace log. For several trace logs generated by an individual service component, the Token Digest value may be carried only in the first trace log generated, so that the overhead may be saved. Certainly, the Token Digest value may also be carried in each trace log. The OSPE server compares the Token Digest value obtained through calculation with the Token Digest value in the trace log reported by the trace agent. If the two Token Digest values are not consistent, it may be determined that the Token received by this trace agent is tampered. Whichever the trace agent is, when it is found that the Token is tampered, this SLT process is invalid, and the OSPE server initiates an SLT terminating process. In this solution, it is possible to find and locate precisely the tamper of the Token wherever the tamper occurs in the service chain, for example, for the case that the Token is tampered after a designated position (a service component or a section of the service chain), and then the tampered Token is modified back to the correct Token again before the designated position, so that any false SLT that may appear is avoided.

In the above three solutions of the system according to the invention, the following modes may exist during the implementation.

After receiving the SLT Token, the trace agent may first perform tracing according to the SLT Token information, then calculate the Token Digest value of the SLT Token according to the SLT Token information, and report the Token Digest value to the OSPE server for verifying whether the trace task is tampered. If the OSPE server determines that the Token received by the trace agent is tampered, the OSPE server notifies the trace agent that the received Token is tampered, and initiates an SLT terminating process simultaneously.

Alternatively, after receiving the SLT Token, the trace agent may first calculate the Digest value of the SLT Token according to the SLT Token information, and report the Token Digest value to the OSPE server for verifying whether the trace task is tampered. If the OSPE server determines that the Token received by the trace agent is tampered, the OSPE server notifies the trace agent that the received Token is tampered, and initiates an SLT terminating process simultaneously. Thus, the trace agent does not initiate the trace, and the Token is deleted in the service request by the trace processing unit, so that the subsequent service component does not initiate the false trace. If the OSPE server determines that the Token is not tampered, the OSPE server notifies the trace agent that the received Token is correct. Then the trace agent initiates tracing normally, and reports the trace log. In this mode, the tamper of the Token may be found earlier, so that the processing resources wasted due to the false trace performed by the service component may be reduced. Because the trace is initiated by the trace agent only when it is determined that the trace task is not tampered, the false trace may be earlier found and terminated.

Furthermore, if the Token sent by the OSPE server already contains the Token Digest value information of this Token, the trace agent may also perform verification on the Token, so that the SLT efficiency may be improved. The Token Digest value information contained in the Token is inserted into the Token by the OSPE server after the Token Digest value is obtained through calculation according to the Token information. It should be noted that the present invention is not limited to the case that the OSPE server calculates the SLT Token and obtains the Token Digest value and inserts the Token Digest value into the Token. Other devices may be employed to perform this operation. If the Token in the service request is tampered, but the Token Digest value is not tampered, the trace agent for the service component may calculate the SLT Token Digest, and compare the Token Digest value obtained through calculation with the Token Digest value carried in the Token, so as to determine whether the Token is tampered. If it is found that the Token is tampered, the trace agent does not initiate tracing, and the trace processing unit of the trace agent deletes the Token in the service request, so that the subsequent service component does not initiate the false trace. The trace agent may also report information about the tamper of the Token to the OSPE server, and the OSPE server initiates an SLT terminating process. If the Token and the Token Digest value carried in the Token are tampered simultaneously, which makes the Token Digest value obtained through calculation based on the Token the same as the Token Digest value carried in the Token, the trace agent is not able to detect that the Token is tampered. The trace agent initiates tracing, puts the Token Digest value into the trace log, and reports the trace log to the OSPE server for verification. The OSPE server compares the Token Digest value of the SLT Token calculated by itself with the Token Digest value reported by the trace agent, or compares the two Token Digest values reported by the trace agents at two end points of a designated section. If the OSPE server determines that the two Token Digest values are different, it is determined that the Token is tampered, and this SLT process is invalid. The OSPE server initiates the SLT terminating process. In this case, the capability of verifying whether the Token is tampered of the trace agent itself may be enhanced. In some cases, it can be determined that the Token is tampered without the participation of the OSPE server. Thus, the efficiency of the SLT is improved to a certain degree. It should be noted that in this case, the OSPE server may not be required to participate in determining whether the Token Digest value is tampered. In other words, it is determined by the trace agent directly whether the Token Digest value is tampered. The trace agent compares the Token Digest value obtained through calculation by itself with the Token Digest value carried in the Token. When the two Token Digest values are consistent, it is determined that the Token is not tampered. When the two Token Digest values are not consistent, it is determined that the Token is tampered.

Furthermore, it should be noted that those skilled in the art may understand that all or part of the processes in the embodiments stated above may be implemented with hardware relevant to programmed instructions. The program may be stored in a computer readable storage medium, such as ROM/RAM, Magnetic Disc, and Compact Disc.
The method and system for detecting the status of the trace task as well as the trace agent and trace control server are described in detail. Specific embodiments are used for illustrating the principle and implementation of the present invention in the description. The illustration of the embodiments is only intended to help understand the method and the core idea of the present invention. Additional modifications and application fields will readily occur to those skilled in the art based on the idea of the present invention. Therefore, the invention in its broader aspects is not limited to the specific details and representative embodiments shown and described herein.

## Claims

1. A method for detecting status of a trace task, comprising:
calculating a token digest value of a service level tracing token according to information of the service level tracing token; and
verifying whether the token digest value is changed, wherein:
if the token digest value is unchanged, determining that a trace task is not tampered;
if the token digest value is changed, determining that the trace task is tampered.

2. The method for detecting the status of the trace task according to claim 1, comprising
calculating, by a trace control server, the token digest value of the service level tracing token according to the information of the service level tracing token;
calculating, by a trace agent, the token digest value of the service level tracing token according to the information of the service level tracing token, after receiving the service level tracing token; and reporting the token digest value to the trace control server; and
determining, by the trace control server, whether the trace task is tampered through verifying whether the token digest value reported by the trace agent and the token digest value obtained through calculation performed by the trace control server are consistent.

3. The method for detecting the status of the trace task according to claim 1, wherein the trace agent is a designated trace agent or any trace agent selected from all the trace agents.

4. The method for detecting the status of the trace task according to claim 1, wherein the trace agent is a trace agent at an end point of a designated trace section;
when receiving the service level tracing token, trace agents at both end points of the designated trace section calculate token digest values of the service level tracing token according to the information of the service level tracing token, and report the token digest values to the trace control server; and
the trace control server determines whether the trace task is tampered by verifying whether the token digest values reported by the trace agents at both end points of the designated trace section are changed.

5. The method for detecting the status of the trace task according to any one of claims 2 to 4, wherein:
after receiving the service level tracing token , the method further comprises:
performing, by the trace agent, tracing according to the information of the service level tracing token; calculating the token digest value of the service level tracing token according to the information of the service level tracing token and reporting the token digest to the trace control server.

6. The method for detecting the status of the trace task according to claim 5, wherein the trace agent reports the token digest value to the trace control server by putting the token digest value into a first trace log, or putting the token digest value into each trace log.

7. The method for detecting the status of the trace task according to any one of claims 2 to
4, further comprising:
notifying, by the trace control server, a determination result to the trace agent;
if determining that the trace task is not tampered, performing, by the trace agent, tracing according to the information of the service level tracing token; and
if determining that the trace task is tampered, deleting by the trace agent the service level tracing token in a service request.

8. The method for detecting the status of the trace task according to any one of claims 1, 3 or 4, wherein the token digest value is carried in information of the service level tracing token; and
when receiving the service level tracing token, the trace agent calculates the token digest value of the service level tracing token according to the information of the service level tracing token, and compares the token digest value obtained through calculation with the token digest value carried in the service level tracing token; if the two token digest values are not consistent, the trace agent determines that the trace task is tampered.

9. The method for detecting the status of the trace task according to claim 8, further comprising:
reporting, by the trace agent, the token digest value obtained through calculation to the trace control server when the two token digest values are consistent; and
determining, by the trace control server, whether the trace task is tampered.

10. The method for detecting the status of the trace task according to claim 8, wherein the token digest value carried in the service level tracing token is inserted into the service level tracing token by the trace control server after the token digest value is obtained through calculation according to the information of the service level tracing token.

11. The method for detecting the status of the trace task according to claim 8, wherein the trace agent reports a result of the service level tracing is tampered to the trace control server when the trace agent determines that the trace task is tampered.

12. The method for detecting the status of the trace task according to any one of claims 8 to 11, wherein the trace agent deletes the service level tracing token in the service request after determining that the trace task is tampered.

13. The method for detecting the status of the trace task according to any one of claims 1 to 4, wherein:
if the trace task is tampered, the trace control server terminates the current trace task.

14. A method for detecting status of a trace task, comprising:
receiving a token digest which is calculated according to information of a service level tracing token and reported by a trace agent;
verifying whether the token digest is changed, wherein:
if the token digest is unchanged, determining that the trace task is not tampered;
if the token digest is changed, determining that the trace task is tampered.

15. The method for detecting the status of the trace task according to claim 14, further comprising:
determining whether the trace task is tampered through verifying token digests reported by trace agents at both end points of a designated trace section; or
calculating the token digest according to the information of the service level tracing token, and determining whether the trace task is tampered through verifying the token digest obtained through calculation and the token digest reported by the trace agent.

16. A method for detecting status of a trace task, comprising:
receiving a service level tracing token sent by a trace control server;
calculating a token digest according to information of the service level tracing token;
comparing the token digest obtained through calculation with a token digest carried in the service level tracing token, wherein:
if the token digest is unchanged, determining that the trace task is not tampered;
if the token digest is changed, determining that the trace task is tampered.

17. The method for detecting the status of the trace task according to claim 16, further comprising:
reporting the token digest obtained through calculation to the trace control server when it is determined that the trace task is not tampered; and
determining, by the trace control server, whether the trace task is tampered.

18. The method for detecting the status of the trace task according to claim 16, wherein the token digest carried in the service level tracing token is obtained through calculation performed by the trace control server according to the information of the service level tracing token, and is inserted into the service level tracing token by the trace control server.

19. A system for detecting status of a trace task, comprising:
a trace agent, adapted to calculate a token digest value of a service level tracing token according to information of the service level tracing token, and report the token digest value; and
a trace control server, adapted to send the service level tracing token to the trace agent and verify whether the token digest value reported by the trace agent is changed; if the token digest value is unchanged, determine that the trace task is not tampered; if the token digest value is changed, determine that the trace task is tampered.

20. The system for detecting the status of the trace task according to claim 19, wherein the trace control server comprises:
a first digest processing unit, adapted to determine whether the trace task is tampered through verifying whether token digest values reported by trace agents for both end points of a designated trace section are changed; or adapted to calculate the token digest value of the service level tracing token according to the information of the service level tracing token, and determine whether the trace task is tampered through verifying whether the token digest value obtained through calculation and the token digest value reported by the trace agent are consistent.

21. The system for detecting the status of the trace task according to claim 19 or 20, wherein the trace agent further comprises:
a trace processing unit, adapted to perform tracing according to the information of the service level tracing token; and
a second digest processing unit, adapted to calculate the token digest value of the service level tracing token according to the information of the service level tracing token, and report the token digest value to the trace control server.

22. A system for detecting status of a trace task, comprising:
a trace control server, adapted to send a service level tracing token;
a trace agent, adapted to calculate a token digest value of the service level tracing token according to information of the service level tracing token after receiving the service level tracing token, and compare the token digest value obtained through calculation with a token digest value carried in the service level tracing token; if the token digest is unchanged, it is determined that the trace task is not tampered; otherwise, it is determined that the trace task is tampered.

23. The system for detecting the status of the trace task according to claim 22, wherein the trace control server comprises:
a first digest processing unit, adapted to calculate the token digest value of the service level tracing token according to the information of the service level tracing token, and insert the token digest value into the service level tracing token.

24. The system for detecting the status of the trace task according to claim 22, wherein the trace agent comprises:
a trace processing unit, adapted to perform tracing according to the information of the service level tracing token; and
a second digest processing unit, adapted to calculate a token digest value of the service level tracing token according to information of the service level tracing token, and compare the token digest value obtained through calculation with the token digest value carried in the service level tracing token; if the token digest is changed, it is determined that the trace task is tampered; otherwise, it is determined that the trace task is not tampered.

25. The system for detecting the status of the trace task according to claim 24, wherein:
when the token digest is unchanged, the second digest processing unit is further adapted to report the token digest obtained through calculation to the trace control server, and the trace control server determines whether the trace task is tampered.

26. A trace control server, comprising:
a first digest processing unit, adapted to verify whether a token digest value is changed; if the token digest value is unchanged, it is determined that a trace task is not tampered; if the token digest value is changed, it is determined that the trace task is tampered.

27. The trace control server according to claim 26, wherein:
the first digest processing unit determines whether the trace task is tampered through verifying token digest values reported by trace agents at both end points of a designated trace section; or
the first digest processing unit calculates the token digest value of a service level tracing token, and determines whether the trace task is tampered through verifying whether the token digest value obtained through calculation and a token digest value reported by a trace agent are consistent.

28. The trace control server according to claim 27, wherein the first digest processing unit is further adapted to terminate the current tracing according to a verification result that the trace task is tampered.

29. A trace agent, comprising:
a trace processing unit, adapted to perform tracing according to information of a service level tracing token; and
a second digest processing unit, adapted to calculate a token digest value of the service level tracing token according to the information of the service level tracing token, and report the token digest value to a trace control server for verifying whether a trace task is tampered.

30. A trace agent, comprising:
a trace processing unit, adapted to perform tracing according to information of a service level tracing token; and
a second digest processing unit, adapted to calculate a token digest value of the service level tracing token according to information of the service level tracing token, and compare the token digest value obtained through calculation with the token digest value carried in the service level tracing token; if the token digest is changed, it is determined that the trace task is tampered; , it is determined that the trace task is not tampered.

31. The trace agent according to claim 30, wherein:
when it is determined that the token digest is unchanged, the second digest processing unit is further adapted to report the token digest value obtained through calculation to the trace control server so that the trace control server determines whether the trace task is tampered.
